Europäisches Patentamt

European Patent Office

Office européen des brevets

(19)

(11) Publication number: **0 151 506**
**A1**

(12) # EUROPEAN PATENT APPLICATION

(21) Application number: **85200155.1**

(22) Date of filing: **08.02.85**

(51) Int. Cl.⁴: **B 60 D 1/14**

(30) Priority: **08.02.84 NL 8400405**

(43) Date of publication of application:
**14.08.85 Bulletin 85/33**

(84) Designated Contracting States:
**AT BE CH DE FR GB IT LI SE**

(71) Applicant: **Vennootschap onder Firma J. van Eck & Zn.**
**Kortenhoevenseweg 75**
**NL-4128 CN Lexmond(NL)**

(72) Inventor: **Van Eck, Jacobus**
**Kortenhoevenseweg 77**
**NL-4128 CN Lexmond(NL)**

(74) Representative: **Boelsma, Gerben Harm, Ir. et al,**
**Octrooibureau Polak & Charlouis Laan Copes van**
**Cattenburch 80**
**NL-2585 GD Den Haag(NL)**

(54) **A coupling device between a truck and a trailer, provided with a telescopically extendible tow bar.**

(57) The invention relates to a coupling device between a truck and a trailer, provided with a tow bar which is telescopically extendible in dependence of the angle between the longitudinal axes of the truck and the tow bar, said angle being measured in the horizontal plane, whereby at least one auxiliary connection between a point of the extendible tow bar section in or adjacent the vertical longitudinal plane and a fixed point of the truck located laterally from the towing eye on the truck, said auxiliary connection being formed by a hydraulic piston-cylinder device, an hydraulic piston-cylinder assembly being used for moving the slidable tow bar section in and out, said assembly being connected with the piston-cylinder device of the auxiliary connection in such a way, that hydraulic fluid expelled from the hydraulic piston-cylinder device in case of a lengthening or shortening from the mid position of said auxiliary connection, will be supplied to the piston side of the hydraulic piston-cylinder assembly causing an outgoing sliding movement of the extendible tow bar section, while in case of a lengthening or shortening towards the mid position of the said connection hydraulic fluid will be supplied to that piston side of the hydraulic piston-cylinder assembly which causes a contraction of the tow bar.

Croydon Printing Company Ltd.

Short title: A coupling device between a truck and a trailer, provided with a telescopically extendible tow bar.

The invention relates to a coupling device between a truck and a trailer, provided with a tow bar which is telescopically extendible in dependence of the angle between the longitudinal axes of the truck and the tow bar, said angle being measured in the horizontal plane.

A well-known coupling device of this type is designed to couple a two-axled trailer, i.e. a trailer the forward wheel axle of which is making part of an assembly that is mounted under the main frame of the trailer for a turning movement about a vertical axis, while the fixed section of the tow bar is making part of said assembly. The inward and outward sliding movements of the slidable section of the tow bar is effected by a push rod, which engages the slidable tow bar section and is connected to a crank-disc making also part of said assembly, said crank-disc being subjected to an angular movement relative to said assembly when the latter is performing a turning movement with respect to the longitudinal axis of the trailer, said angular movement causing a displacement of the push rod head longitudinally of said tow bar.

The advantage of a telescopically extendible tow bar is to be seen in that in the straightened position of the truck-trailer combination the intermediary space between the truck and the trailer may be reduced to a minimum by using the minimum tow bar length in such situation. The effective cargo length thus be as large as possible relative to the maximum length of the combination permitted by the regulations. The larger spacings between truck and trailer required for passing through curves are automatically effected by said push rod causing the tow bar to extend.

It is a disadvantage of this well-known coupling device, that it is dependent of the presence of a steering assembly with the trailer to be coupled. Consequently such a coupling device is not suitable for coupling a one axle trailer, missing a steering assembly.

The invention aims at to remove this advantage of the well-known coupling device and also to remove the advantages connected with the special way of driving the extendible tow bar section.

The coupling device proposed by the invention is characterized by at least one auxiliary connection between a point of the extendible tow bar section in or adjacent the vertical longitudinal plane and a fixed point of the truck located laterally from the towing eye on the truck, said auxiliary connection being formed by a hydraulic piston-cylinder device, an hydraulic piston-cylinder assembly being used for moving the slidable tow bar section in and out, said assembly being connected with the piston-cylinder device of the auxiliary connection in such a way, that hydraulic fluid expelled from the hydraulic piston-cylinder device in case of a lengthening or shortening from the mid position of said auxiliary connection, will be supplied to the piston side of the hydraulic piston cylinder assembly causing an outgoing sliding movement of the extendible tow bar section, while in case of a lengthening or shortening towards the mid position of the said connection hydraulic fluid will be supplied to that piston side of the hydraulic piston-cylinder assembly which causes a contraction of the tow bar.

The coupling device according to this invention is suitable to be used for both of the trailer types above referred to. The coupling device according to the invention is particularly suitable for use with one-axle trailers. When coupling such trailers the tow eye has to be located rather close behind the rear axle of the truck, i.e. at a rather large distance forwardly of the rear side of the truck. Using the coupling device according to the invention permits the spacing between truck and trailer in the straightened position of the combination to be reduced to a minimum size in the order of 0.2 meter.

According to a further characteristic of the invention the piston-cylinder assembly comprises two piston cylinder devices, which are serially arranged according to the longitudinal axis of the tow bar and have their cylinder bottoms fixed one relative to the other, the rearwardly projecting end of one piston rod engaging the frame of the trailer, while the forwardly projecting end of the second piston rod is attached to the slidable tow bar section, and each of the two cylinder spaces of the hydraulic cylinder device of the auxiliary device being connected via a check valve to the piston rod end of one cylinder and is further connected to the piston head end of the second cylinder of the piston-cylinder assembly.

When driving with the truck-trailer combination in the straigthened position of the latter both of the pistons of the piston-cylinder assembly take their inward positions in the respective cylinders, corresponding to the minimum tow bar length. When passing through a curve one of the pistons will remain in its inward position

- 3 -

0151506

within the respective cylinder, while the second piston will be pushed outwardly from the respective cylinder by the pressure of the hydraulic fluid supplied to the respective cylinder, which results in an increase of the effective tow bar length.

In a preferred embodiment the auxiliary connection is designed as a double acting piston cylinder device, the cylinder spaces on either side of the piston having equal cross-sections. In a practical embodiment the slidable tow bar section is formed as a tube, which surrounds the piston-cylinder assembly and which is slidably supported in the stationary frame of the trailer, the forwardly projecting piston rod end being fastened to a wall portion closing the forward end of the tube, said wall portion carrying a tow eye, while the rearwardly projecting piston rod end projects beyond the open rearward end of the tube.

As indicated hereinabove, the use of the coupling device according to this invention with a one axle trailer permits the spacing between the truck and the trailer in the straigthened position of the combination to be kept very small. The consequence of this could be, that in a situation, in which the truck and the trailer are on road portions which include an angle of less than 180°, the rear wall of the truck and the forward wall of the trailer could get into contact at the upper side. In order to preclude such an undesired contact a relatively short piston-cylinder device is arranged between the rearwardly projecting piston rod end of the piston-cylinder assembly and the fixed anchorings point of the trailer frame, the cylinder space above the piston of said device being under pretension, while the cylinder space behind the piston being connected to the working space of a further piston-cylinder device, the piston of which being connected to a vertically adjustable pad mounted on the slidable tow bar section, said pad cooperating with an abutment at the lower side of the frame of the truck extending rearwardly beyond the towing eye, in such a way, that in case of a rearward tilting of the truck relative to the trailer, the pad is pushed downwardly, against pretension, by said abutment, resulting in a decrease of the working space of said second piston-cylinder device and causing the piston of said first piston-cylinder device to slide forwardly outwardly. In such a way a short lasting lengthening of the tow bar is effected in the situation under consideration, while

the truck-trailer combination is taking its straigthened position (in the cabin vertical longitudinal mid plane).

The invention will be hereinafter further described by way of example with reference to the accompanying drawing.

Fig. 1 shows an upper view of the foremost portion of the frame of a one axle trailer;

Fig. 2 shows a side elevation, partially in longitudinal section, of the frame portion of Fig. 1, in which also the rearmost portion of the truck extending rearwardly above the tow bar is indicated and

Fig. 3 represents the hydraulic circuit of the coupling device according to the invention.

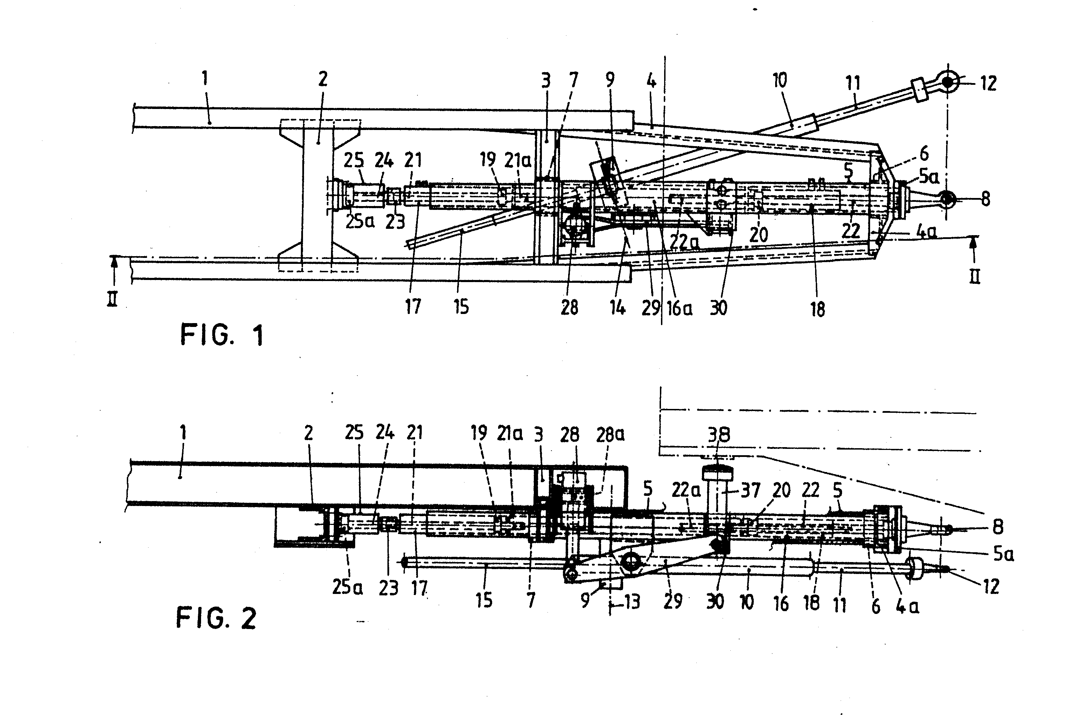

With reference to Fig. 1 and 2 1 indicates the longitudinal beams of the frame of a one axle trailer, which are interconnected by cross-beams 2 and 3. The tow bar comprises a trapezoid portion 4 fixedly connected to the trailer frame and a sidable portion 5 formed by a tube, which is, according to the longitudinal axis of the trailer, slidably guided through a front guide tube 6 in the front cross-beam 4a of the fixed tow bar portion 4 and a rear guide tube 7 in the cross-beam 3. The foremost end of the tube 5, seen at the right in the drawing, is closed by an end wall 5a. The tow eye 8 is fastened to the outer side of this end wall.

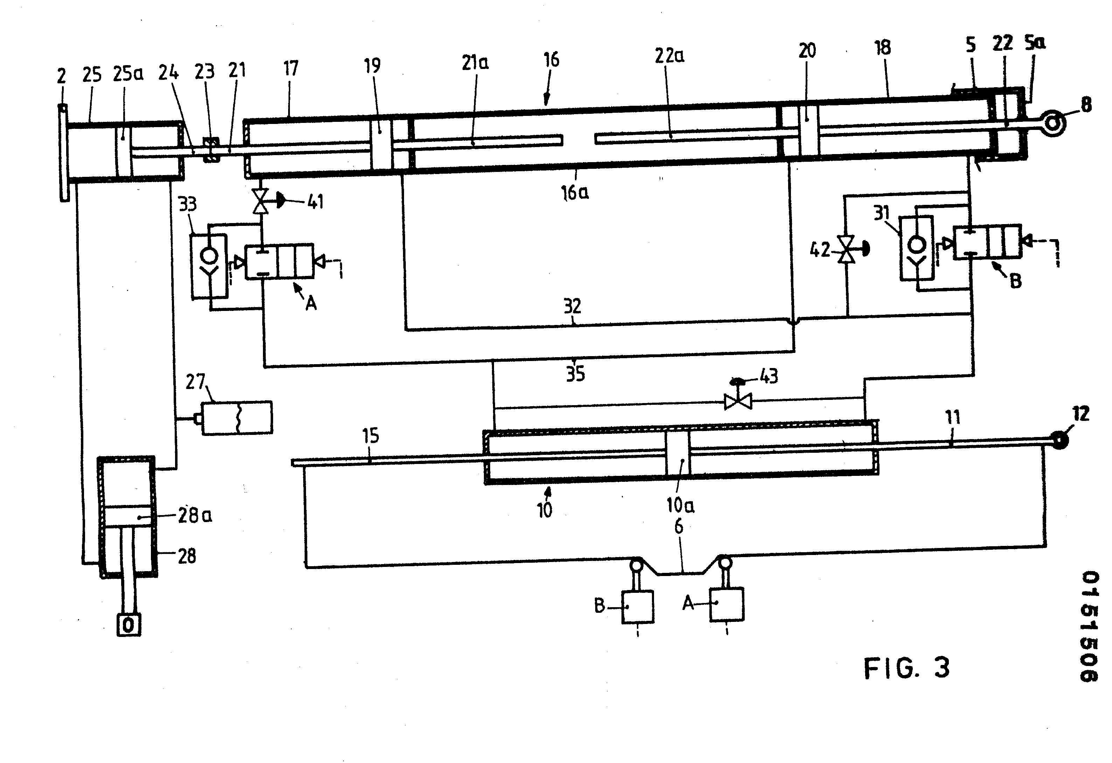

In the drawing the tube 5 is taking its left most, contracted position. Adjacent the cross-beam 3 the tube 5 has at its lower side a bracket 9 for the left cylinder end of a double acting hydraulic piston cylinder device indicated at 10, the piston rod end of which is projecting to the right and is provided with a coupling eye 12 for connection to a fixed point of the truck, which point is located laterally at some distance of the central coupling point formed by the towing eye 8. The suspension of the left cylinder end of the hydraulic cylinder 10 in the bracket 9 is such, that a pivoting movement about a vertical axis 13 as well as a pivoting movement about a horizontal axis 14 are permitted. The cylinder spaces on both sides of the piston (not shown in Fig. 1 and 2) of the device 10 has equal cross-sections; for this purpose the said piston is connected with an idle piston rod 15, extending beyond the left end of the piston-cylinder device 10. The piston cylinder device 10 constitutes an auxiliary connection between a fixed point (viz. the bracket 9) and the above mentioned fixed point of the truck, located laterally from the towing point. It will be clear, that when, starting from the straightened position of the truck trailer combination shown in Fig. 1 and 2, the truck is entering into a left or right turn, in which situation the auxiliary coupling eye 12 is performing a turning movement to the left or to the right about the coupling point constituted by the eye 8, the piston-cylinder device 10 will be subjected to a corresponding shortening or lengthening respectively. This shortening or lengthening of the auxiliary connection constituted by the piston-cylinder device 10 is utilized as a signal for a sliding movement (to the right when seen in the drawing) of the tube and a consequent increase of the spacing between the rear side of the truck and the front side of the trailer. The mechanism by means of which the tube 5 may be extended, comprises a hydraulic piston cylinder assembly, which is substantially housed within said tube 5. The piston cylinder assembly is composed of two double acting piston cylindr devices 17 and 18, which are serially arranged according to the axis of the tube 5 and have pistons 19 and 20 (vide also the circuit according to Fig. 3) and piston rod ends 21 and 22 projecting rearwardly and forwardly respectively. The rearwardly projecting piston rod end 21 is connected by a connector 23 to the projecting piston rod end 24 of a relatively short hydraulic cylinder 25 attached to the cross-beam 2. In normal driving conditions, i.e. when driving on a flat road, the piston within the hydraulic cylinder 25 will take its rearmost position so that the hydraulic cylinder 25 may be considered as a fixed anchoring point for the piston rod end 21. The forwardly projecting piston rod end 22 is attached to the innerside of the tube end wall 5a.

The cylinders 17 and 18 are connected by a cylindrical intermediary piece 16a, in which the idle piston rods 21a and 22a, which extend to the right and to the left respectively of the pistons 19 and 20 respectively, may project freely. By using the idle piston rods 21a and 22a the working spaces on both sides of the pistons 19 and 20 have equal effective cross-sections.

The operation of the piston cylinder assembly 16 under control of the piston cylinder device 10 will hereinafter be further described with reference to the diagram of Fig. 3. The diagram of Fig. 3 shows the system in its mid position, which corresponds with the straightened position of the truck trailer combination. In said mid position the pistons 19 and 20 and thus the tube 5 are completely contracted, while the piston 10a of the hydraulic piston cylinder device 10 is taking a mid position and both of the valves A and B (to be described hereinafter) are closed.

Starting from this mid position it is assumed, that the truck is entering into a curve and that this involves an increase of the effective length of the piston-cylinder device 10. This means that the piston 10a will move to the right and hydraulic fluid will be expelled from the cylinder space on the right hand side of the piston 10a. This hydraulic fluid will, through check valve 31 pressurize the cylinder spance at the right hand side of the piston 20 (due to which the latter piston will be fixedly pressed in its contracted position) and will flow, via the conduit 32, into the cylinder space on the right hand side of the piston 19. As a consequence of this the cylinder assembly 17, 16a, 18 and the stationary piston 20 therein will be moved to the right, thereby effecting an increase in effective length of the tow bar. For this purpose it is required that hydraulic fluid is permitted to drain off from the space on the left hand side of the piston 19. Such drain off is actually permitted due to the fact that the valve A is opened by a cam C moving along with the piston 10a travelling to the right. The discharging hydraulic fluid will replenish the cylinder space developing on the left hand side of the piston 10a.

When the truck is brought back to a straight track, the piston 10a will return to its mid position thereby causing hydraulic fluid to flow from the working space on the left hand side of the piston 10a via the check vlave 33 to the cylinder space on the left hand side of the piston 19, so that the latter may return to its contracted position and the assembly, consisting of the cylinders 17, 16a and 18 may return to the left. Hydraulic fluid discharging from the space on the right hand side of the piston 19 will flow, via conduit 32 into the space on the right hand side of the piston 10a.

Assuming now the truck is entering into a curve in the opposite direction, involving a shortening of the effective length of the auxiliary connection 10, the system will operate in a similar way. The piston 10 will then move to the left and will cause the valve B to open, so that hydraulic fluid is permitted to flow from the space on the left hand side of the piston 10a, via the conduit 35, to the space on the left hand side of the piston 20, while hydraulic fluid is also permitted to flow from the space on the right hand side of the piston 20, via the opened valve B, to the increasing space on the right hand side of the piston 10a. In this case the cylinder assembly 17, 16a, 18 remains stationary; only the tube 5 will, together with the piston 20 and the piston rod 5a, slide forwardly, thereby causing the tow bar to increase in effective length.

The coupling system has been described hereinabove while considering the hydraulic cylinder 25 as a fixed anchoring point for the rearwardly projecting piston rod end 21. The space in the right hand side of the piston 25a in the hydraulic cylinder 25 is kept under a pressure which amply exceeds the towing load, via a reservoir 27 which is partially filled with a gas under pressure. Under certain conditions, however, the piston 25a may be moved, against said pressure, to the right and consequently cause a lengthening of the effective tow bar length, when the pressure in the space on the left hand side of the piston 25a is increased to a sufficient level. Such pressure increase will take place by expelling hydraulic fluid from the space under a hydraulic auxiliary cylinder 25 towards the space on the left hand side of the piston 25a. For the auxiliary cylinder 28 reference is made to Fig. 1 and 2, in which this auxiliary cylinder is mounted in a vertical position laterally from the tube 5; the piston 28a of said cylinder may be pushed upwardly by means of a two-armed lever 29 pivotally mounted to the tube 5. The lever end of said two-armed lever, turned away from the auxiliary cylinder 28, is pivotally connected with a pad 37 which is guided for up and down sliding movements in a vertical guide way 30. The pad 37 cooperates with an abutment 38, extending along an arc of a circle in a horizontal plane and applied to the lower side of a rear portion of the frame of the truck at a level above said tube 5.

Assuming the truck is in the initial phase of moving from a horizontal road section onto a rising road section it will be clear that the rearwardly overhanging frame portion of the truck will push the pad 37 downwardly so that the piston 28a in the cylinder 28 will be pushed upwardly and hydraulic fluid will be discharged from the space above piston 28a into the space on the left hand side of the piston 25a in the hydraulic cylinder 25. This causes the piston 25a to make a sliding movement to the right, which results in a corresponding lengthening of the effective tow bar length. This permits the truck and the trailer to pivot a little one relative to the other about the towing eye without the risk of contacting each other on the upper side. As soon as the situation has returned to "flat road" conditions, so that the pad 37 is permitted to move upwardly, the tow bar will retract itself into its contracted position due to the pretensioning pressure in the space on the right hand side of the piston 25a.

In the diagram of Fig. 3 three manually operable shut-off valves 41, 42 and 43 are shown. The valve 43 is arranged in a by-pass between the spaces on both sides of the piston 10a. This valve is normally closed bu may be opened under particular circumstances to put the piston-cylinder device 10 out of operation as control device for the central piston.cylinder assembly. The valve 42 is also closed during normal use, while the valve 41 is in an open position during normal use. By closing valve 41 and opening valve 42, while valve 43 be in its opened position, the tow bar may be fixed in its extended position independent of the length of the auxiliary connection 10, which may be of importance when driving up and from a ferry boat.

C L A I M S

1.       A coupling device between a truck and a trailer, provided with a tow bar which is telescopically extendible in dependence of the angle between the longitudinal axes of the truck and the tow bar, said angle being measured in the horizontal plane, characterized by at least one auxiliary connection between a point of the extendible tow bar section in or adjacent the vertical longitudinal plane and a fixed point of the truck located laterally from the towing eye on the truck, said auxiliary connection being formed by a hydraulic piston-cylinder device, an hydraulic piston-cylinder assembly being used for moving the slidable tow bar section in and out, said assembly being connected with the piston-cylinder device of the auxiliary connection in such a way, that hydraulic fluid expelled from the hydraulic piston-cylinder device in case of a lengthening or shortening from the mid position of said auxiliary connection, will be supplied to the piston side of the hydraulic piston-cylinder assembly causing an outgoing sliding movement of the extendible tow bar section, while in case of a lengthening or shortening towards the mid position of the said connection hydraulic fluid will be supplied to that piston side of the hydraulic piston-cylinder assembly which causes a contraction of the tow bar.

2.       A coupling device according to claim 1, characterized in that the piston-cylinder assembly comprises two piston-cylinder devices, which are serially arranged according to the longitudinal axis of the tow bar and have their cylinder bottoms fixed one relative to the other, the rearwardly projecting end of one piston rod engaging the frame of the trailer, while the forwardly projecting end of the second piston rod is attached to the slidable tow bar section, and each of the two cylinder spaces of the hydraulic cylinder device of the auxiliary device being connected via a check valve to the piston rod end of one cylinder and is further connected to the piston head end of the second cylinder of the piston-cylinder assembly.

3.       A coupling device according to claims 1-2, characterized in that the auxiliary connection is designed as a double acting piston cylinder device, the cylinder spaces on either side of the piston having equal cross-sections.

4.       A coupling device according to claims 1-3, characterized in that the slidable tow bar section is formed as a tube, which surrounds the piston-cylinder assembly and which is slidably supported in the stationary frame of the trailer, the forwardly projecting piston rod end being fastened to a wall portion closing the forward end of the tube, said wall portion carrying a tow eye, while the rearwardly projecting piston rod end projects beyond the open rearward end of the tube.

5. Coupling device according to claims 1 to 4, characterized in that a relatively short piston-cylinder device is arranged between the rearwardly projecting piston rod end of the piston-cylinder assembly and the fixed anchorings point of the trailer frame, the cylinder space above the piston of said device being under pretension, while the cylinder space behind the piston being connected to the working space of a further piston-cylinder device, the piston of which being connected to a vertically adjustable pad mounted on the slidable tow bar section, said pad cooperating with an abutment at the lower side of the frame of the truck extending rearwardly beyond the towing eye, in such a way, that in case of a rearward tilting of the truck relative to the trailer, the pad is pushed downwardly, against pretension, by said abutment, resulting in a decrease of the working space of said second piston-cylinder device and causing the piston of said first piston-cylinder device to slide forwardly outwardly.

FIG. 1

FIG. 2

1|2

0151506

0151506

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 244 434 (W.B. REED et al.) <br> * Whole document * <br> --- | 1 | B 60 D 1/14 |
| A | DE-A-3 150 335 (F.X. KÖGEL GmbH) <br> * Abstract; figures * <br> --- | 1 | |
| A | DE-A-2 721 975 (G. ROSEN) <br> --- | | |
| A | US-A-3 727 945 (PARKER) <br> --- | | |
| A | DE-A-2 950 121 (C. BLUMHARDT GmbH & CO.) <br> ----- | | |

**TECHNICAL FIELDS SEARCHED (Int. Cl.4)**

B 60 D
B 62 D

The present search report has been drawn up for all claims

| Place of search <br> THE HAGUE | Date of completion of the search <br> 06-05-1985 | Examiner <br> MENDE H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82